# EUROPEAN PATENT SPECIFICATION

(11) **EP 2 911 157 B1**
(45) Date of publication and mention of the grant of the patent: **01.02.2017**
(21) Application number: 15154562.1
(22) Date of filing: 10.02.2015
(51) Int. Cl.: F01K 7/22, F01K 7/40, F28D 21/00, G21D 1/02, F28B 9/10, G21D 5/00

(54) **Nuclear power plant and non-condensable gas extraction method therefor**
Kernkraftanlage und Extraktionsverfahren für nicht kondensierbares Gas
Centrale nucléaire et son procédé d'extraction de gaz non condensables

(30) Priority: 21.02.2014 JP 2014031876
(43) Date of publication of application: 26.08.2015
(73) Proprietor: Kabushiki Kaisha Toshiba, Tokyo 105-8001 (JP)
(72) Inventor: Sugitani, Naoki, Tokyo 105-8001 (JP); Higasa, Masaaki, Tokyo 105-8001 (JP); Udagawa, Ryozo, Tokyo 105-8001 (JP)
(74) Representative: Moreland, David

(56) References cited:
- US-A1- 2012 039 429

## Description

### BACKGROUND

### Field of the Invention

The present invention relates to a nuclear power plant equipped with a working steam system for a steam jet air ejector as well as to a non-condensable gas extraction method for the nuclear power plant.

### Description of the Related Art

Main systems of a nuclear (atomic) power plant are made up of a main steam system and a condensate/feed-water system, in which a reactor serving as a steam source, a high-pressure turbine, a low-pressure turbine, a steam condenser, a condensate pump, a steam jet air ejector (extractor), a gland steam condenser, a multistage low-pressure feed-water heater, a feed pump, a high-pressure feed-water heater, and the like are connected in the described order and returning to the reactor.

In the nuclear power plant, turbine exhaust condensed in the steam condenser contains non-condensable gases such as hydrogen and oxygen, which are extracted continuously by an air off-take system. The extracted non-condensable gases are sent to an off-gas treatment system and treated there to maintain a degree of vacuum of the steam condenser.

A working steam system 3 of a conventional steam jet air ejector 2 applied to a nuclear power plant 1 is configured as shown in Fig. 6 (see also e.g. US 2012/039429). During startup of the nuclear power plant 1, air in the steam condenser 4 is extracted by a start-up vacuum pump and discharged directly to an exhaust stack 5 to increase the degree of vacuum of the steam condenser 4.

Next, switching is made to a start-stop steam jet air ejector driven by auxiliary boiler steam, and when reactor pressure reaches predetermined pressure, switching is further made to the steam jet air ejector 2 for regular use in order to keep the degree of vacuum of the steam condenser 4 at rated pressure. Regarding ejection from the steam jet air ejector 2, non-condensable gas is released into the atmosphere through the exhaust stack 5 via an off-gas treatment system facilities 6.

The steam jet air ejector 2 is made up of two-stage ejectors 2a and 2b of a steam jet type, an intercooler 2c, and attached piping thereof. The steam jet air ejector 2 requires two stages of ejectors 2a and 2b in order to increase pressure of non-condensable gas from steam condenser vacuum to pressure needed to feed the non-condensable gas into the off-gas treatment system facilities 6.

The ejectors 2a and 2b, which use reactor main steam of great energy as working steam after depressurizing the reactor main steam using a pressure regulating valve 7, have a problem in effective utilization of the main steam.

On the other hand, possible heat cycles of the nuclear power plant 1 include a non-reheat cycle and reheat cycle. A reheat plant is configured such that after doing work in the high-pressure turbine, steam with a large wetness fraction is guided to a moisture separator reheater 8, subjected to moisture removal by the moisture separator 8a, heated (reheated) by first-stage and second-stage heaters 8b and 8c, and led to a low-pressure turbine.

Installation of the moisture separator reheater 8 allows inlet steam of the low-pressure turbine to rise in temperature by being reheated to a superheat region, which increases heat drop in the low-pressure turbine, thereby improving thermal efficiency, and holds down the wetness fraction in a final stage of the turbine, making it possible to reduce impacts caused by decreased thermal efficiency of the turbine and corrosion/erosion of turbine blade material.

Reheating done by the moisture separator reheater 8 is divided into two state for using first-stage reheating and second-stage reheating. In a single-stage reheat cycle, the main steam from the reactor is branched and used as a heating steam source of the heater while in a two-stage reheat cycle, steam is heated (reheated) by two heaters 8b and 8c. Namely, a first-stage heater 8b uses turbine extraction steam from an intermediate stage of the high-pressure turbine as the heating steam source and a second-stage heater 8c uses the main steam from the reactor as the heating steam source, to further raise inlet steam temperature of the low-pressure turbine.

With the moisture separator reheater 8, steam in a heat exchanger tube condenses into water by heating (reheating) steam to be heated (main steam), but when the condensed in a supercooled state, temperature in an outlet portion of the heat exchanger tube will fluctuate cyclically, and consequently, the heat exchanger tube may be damaged by thermal fatigue. To deal with such defect, outlets of exhaust steam of the first-stage and second-stage heaters 8b and 8c after heating are connected to a feed-water heater 9, causing the exhaust steam to be sucked forcibly into the feed-water heater 9 for the condensate/feed-water system using differential pressure between the exhaust steam and the inside of the feed-water heater 9, thereby stabilizing a drain flow in the heat exchanger tube and facilitating drain discharge.

Generally, the exhaust steam produced after the main steam is heated (reheated) by the moisture separator reheater 8 is called scavenging steam. For example, in the case of the two-stage reheat cycle, the scavenging steam of the first-stage heater 8b (first-stage scavenging steam) and the scavenging steam of the second-stage heater 8c (second-stage scavenging steam) are recovered in the high-pressure feed-water heater 9.

The main steam of the reactor contains oxygen, hydrogen, and the like generated by radiolysis of reactor water and the first-stage scavenging steam and second-stage scavenging steam are recovered in the high-pressure feed-water heater 9, increasing dissolved oxygen concentration in feed water.

In the nuclear power plant 1, the dissolved oxygen concentration in the feed water is controlled so as not to exceed a set point of water quality standard, and in an event of a high dissolved oxygen concentration in the feed water, there may cause hamper plant operation.

On the other hand, as examples of working steam for a steam jet air ejector in a steam power generation plant, Patent Document 1 (Japanese Patent Laid-Open No. 2012-87704) discloses boiler main steam, turbine bleed steam, feed-water heater steam, reheat steam heated by a reheater, and steam before being heated by the reheater, from which the steam source at the pressure closest to a specified pressure of steam jet air ejector working steam pressure is selected to supply appropriate working steam.

The invention described in Patent Document 1 leads to improvement of plant thermal efficiency because required amounts of steam need to be branched off from steam sources as the working steam of the steam jet air ejector instead of using the boiler main steam, and hence, a significant improvement effect cannot be expected. In addition, Patent Document 1 does not give consideration to reductions in the dissolved oxygen concentration in the feed water, which is of concern to nuclear power plants.

Furthermore, since the nuclear power plant 1 uses the high-temperature, high-pressure main steam of great thermal energy as the working steam of the steam jet air ejector 2, the main steam being generated by the reactor, there is room for improvement in terms of plant thermal efficiency.

The present invention has been made in view of the above circumstances and has an object to provide a nuclear power plant and non-condensable gas extraction method therefor, which improve plant thermal efficiency by appropriately controlling working steam of a steam jet air ejector using scavenging steam instead of reactor main steam.

Another object of the invention is to provide an nuclear power plant and non-condensable gas extraction method therefor, which can reduce dissolved gas concentration of non-condensable gases in feed-water by guiding scavenging steam recovered in a moisture separator reheater to an exhaust stack.

The above, object can be achieved according to the present invention by providing, in one aspect, a nuclear power plant according to claim 1 and a non-condensable gas extraction method according to claim 5.

The above aspect may provide the following preferred embodiment.

The working steam supply system may include a steam switching control device configured to automatically switch the steam jet air ejector working steam from the reactor main steam to the moisture separator reheater scavenging steam when the moisture separator reheater scavenging steam pressure reaches the specified pressure.

It may be preferred that the moisture separator reheater is a two-stage reheat type moisture separator reheater, and the moisture separator reheater scavenging steam is at least one of moisture separator reheater first-stage scavenging steam and moisture separator reheater second-stage scavenging steam.

It may be further preferred that the working steam system for the steam jet air ejector has a structure in which a moisture separator reheater second-stage scavenging steam line outlet is connected to a moisture separator reheater first-stage heating steam line, the reactor main steam or the moisture separator reheater first-stage scavenging steam is used as the working steam source of the working steam supply system, and the steam jet air ejector working steam is switched from the reactor main steam to the moisture separator reheater first-stage scavenging steam by moisture separator reheater first-stage scavenging steam pressure.

In another aspect of the present invention, there is provided a non-condensable gas extraction method according to claim 5.

In this aspect, it may be preferred that nuclear power plant includes a two-stage reheat type moisture separator reheater, and the reactor main steam, moisture separator reheater first-stage scavenging steam, or moisture separator reheater second-stage scavenging steam is used as the working steam source of the working steam supply system, and the steam jet air ejector working steam is switched by moisture separator reheater scavenging steam pressures from the reactor main steam to the moisture separator reheater second-stage scavenging steam, and then to the moisture separator reheater first-stage scavenging steam.

It may be also preferred that the nuclear power plant includes a two-stage reheat type moisture separator reheater, and a moisture separator reheater second-stage scavenging steam line outlet is connected to a moisture separator reheater first-stage heating steam line, the reactor main steam or the moisture separator reheater first-stage scavenging steam is used as the working steam source of the working steam supply system, and the steam jet air ejector working steam is switched from the reactor main steam to the moisture separator reheater first-stage scavenging steam by moisture separator reheater first-stage scavenging steam pressure.

The nuclear power plant of the characters mentioned above, the plant thermal efficiency can be improved, or the dissolved oxygen concentration can be reduced in feed water.

The nature and further characteristic features of the present invention will be made clearer from the following descriptions made with reference to the accompanying drawings.

### BRIEF DESCRIPTION OF THE DRAWINGS

In the accompanying drawings:
Fig. 1 is an overall structural diagram showing a first and second embodiment of a nuclear power plant;
Fig. 2 is a system diagram showing a working steam system of a steam jet air ejector installed in the nuclear power plant of Fig. 1;
Fig. 3 is an overall structural diagram showing a third and fourth embodiment of the nuclear power plant;
Fig. 4 is a system diagram showing a working steam system of a steam jet air ejector installed in the third embodiment of the nuclear power plant;
Fig. 5 is a system diagram showing a working steam system of a steam jet air ejector installed in the fourth embodiment of the nuclear power plant; and

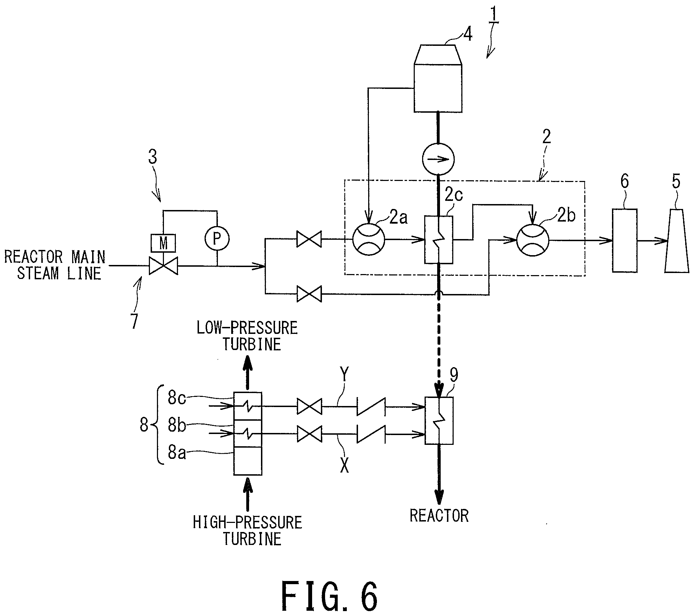

Fig. 6 is a system diagram showing a working steam system of a steam jet air ejector installed in a conventional nuclear power plant.

### DESCRIPTION OF THE PREFERRED EMBODIMENT

Hereunder, preferred embodiments of the present invention will be described with reference to accompanying drawings.

### [First Embodiment]

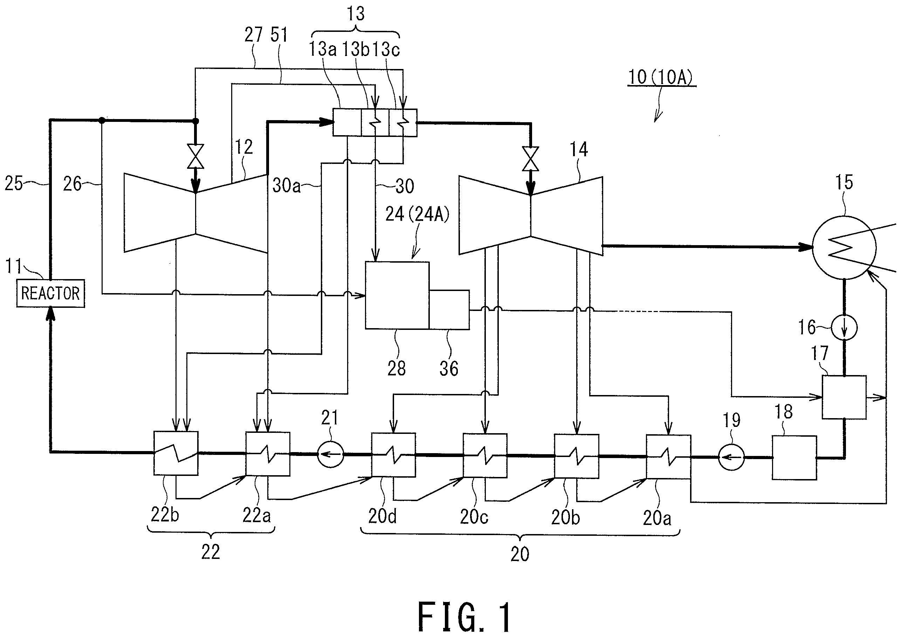

Fig. 1 is an overall structural diagram showing a first embodiment of a nuclear power plant.

The nuclear power plant 10 includes main systems, i.e., a reactor main steam system and a reactor condensate/feed-water system, which are configured as shown in Fig. 1.

With reference to Fig. 1, saturated steam produced in the reactor 11 is led to a high-pressure turbine 12 through a main steam system 25 to drive the high-pressure turbine 12. After working in the high-pressure turbine 12, the steam is led to a low-pressure turbine 14 via a moisture separator reheater 13. The high-pressure turbine 12 and low-pressure turbine 14 are driven rotationally to drive a generator (not shown).

After working in the low-pressure turbine 14, the steam is condensed into steam condensate by a steam condenser 15. The steam condensate is passed through a steam jet air ejector (extractor) 17 and gland steam condenser 18 by a low-pressure condensate pump 16. Then, water quality is regulated to that of reactor feed-water by a condensate filter and condensate demineralizer (not shown), and the steam condensate is then sent to a high-pressure condensate pump 19. After being pressurized by the high-pressure condensate pump 19, the steam condensate is heated in multiple stages of low-pressure feed-water heaters 20 (20a, 20b, 20c, and 20d) by turbine bleed steam from the low-pressure turbine 14 and sent to a reactor feed-water pump 21. Here, the steam condensate becomes a feed water, which is further pressurized, heated in multiple stages, e.g., two stages, of high-pressure feed-water heaters 22 (22a and 22b), and sent to the reactor 11.

The steam jet air ejector (SJAE) 17, which is designed to extract non-condensable gas from the steam condenser 15 by being supplied with working steam of a specified pressure, e.g., 2MPa, from a working steam system 24, functions as a gas extractor.

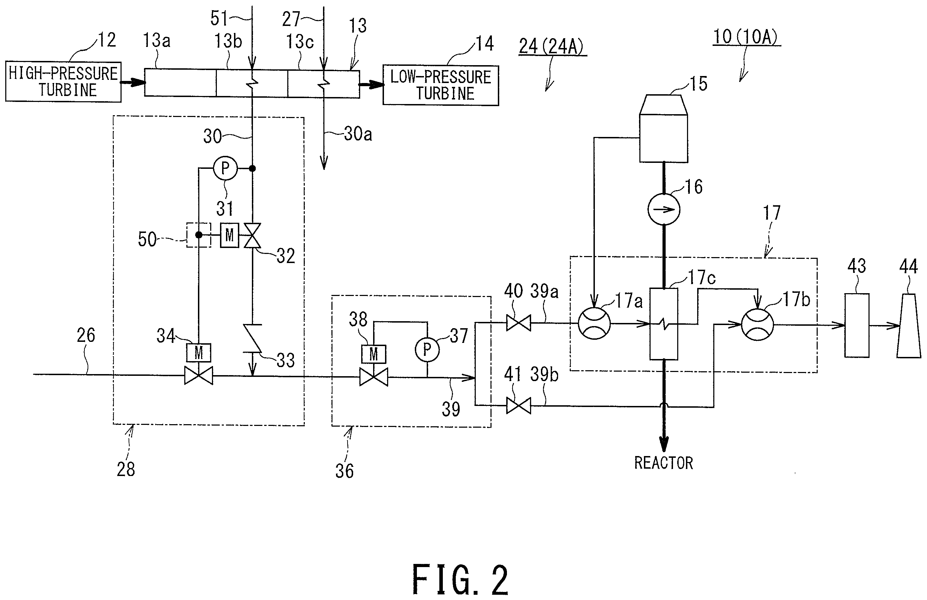

Fig. 2 shows the working steam system 24 of the steam jet air ejector 17, which is a gas extractor. As shown in Fig. 1, the main steam system 25 from the reactor 11 branches midway into a reactor main steam line 26 leading to the steam jet air ejector (SJAE) 17 and a reactor main steam line 27 leading to the moisture separator reheater 13, which is a reheater. The former reactor main steam line 26 is connected to a steam jet air ejector (SJAE) working steam supply system 28, while the latter reactor main steam line 27 is connected to a moisture separator reheater second-stage heater 13c.

The moisture separator reheater 13 is equipped with a first-stage heater 13b configured to be heated by a turbine bleed steam which has worked in the high-pressure turbine 12. The second-stage heater 13c of the moisture separator reheater 13 uses the reactor main steam passing through the reactor main steam line 27, for heating. After heating, in the first-stage heater 13b, the steam which has worked in the high-pressure turbine 12, the turbine bleed steam is sent as scavenging steam to the SJAE working steam supply system 28.

In addition to the scavenging steam guided through a scavenging steam line 30 as a working steam source, the reactor main steam guided through the former reactor main steam line 26 branching off from the reactor main steam system 25 is sent to the SJAE working steam supply system 28.

Further, after heating the steam which has worked in the high-pressure turbine 12, the reactor main steam sent to the moisture separator reheater second-stage heater 13c is sent as scavenging steam to the high-pressure feed-water heaters 22 through a scavenging steam line 30a to heat feed water passing through the feed-water heater 22b (or 22a).

On the other hand, as shown in Fig. 2, the scavenging steam line 30 going to the SJAE working steam supply system 28 is connected with a pressure monitoring device 31, an isolation valve 32, and a check valve 33 in sequence, where the pressure monitoring device 31 is adapted to monitor steam pressure. The scavenging steam line 30 joins the reactor main steam line 26 downstream of an isolation valve 34. In this way, the isolation valves 34 and 32 are installed on the reactor main steam line 26 and scavenging steam line 30, respectively, for isolation from the SJAE working steam supply system 28, which allows the working steam to be switched from the main steam to the scavenging steam when scavenging steam pressure reaches the predetermined specified pressure.

Furthermore, an SJAE working steam delivery system 36 is installed on the downstream side of the SJAE working steam supply system 28. A pressure monitoring device 37 and a pressure regulating valve 38 are installed in the SJAE working steam delivery system 36, where the pressure monitoring device 37 is adapted to monitor the working steam pressure of the steam jet air ejector 17 which is a gas extractor for extracting non-condensable gas out of the steam condenser 15 while the pressure regulating valve 38 acts to regulate the working steam of the steam jet air ejector 17 to the specified pressure, e.g., 2MPa.

The pressure regulating valve 38 makes up a pressure-regulating unit. The working steam regulated to specified pressure by the pressure-regulating unit is sent to the steam jet air ejector 17 not equipped with any active component, and non-condensable gas is forcibly extracted from the steam condenser 15 by the steam jet air ejector 17.

The steam jet air ejector 17 is made up of a multistage (e.g., two-stage) ejector 17a and 17b of a steam jet type, a steam jet air ejector intercooler 17c installed between stages of the multistage ejector 17a and 17b, and attached piping of these ejector and intercooler. The multistage ejector is made up, for example, of a first-stage ejector 17a and second-stage ejector 17b, which are passive components not equipped with any active component. The working steam delivered from the SJAE working steam delivery system 36 is passed through a working steam supply line 39, which branches into two lines, namely, a first working steam line 39a and second working steam line 39b, on which isolation valves 40 and 41 are installed, respectively.

The working steam from the SJAE working steam delivery system 36 is passed through the first working steam line 39a and isolation valve 40 and sent to the steam jet air ejector first-stage ejector 17a, which ejects working steam to aggressively and forcibly suck the non-condensable gas out of the steam condenser 15 through a suction port. The working steam which has absorbed non-condensable gas is sent to the steam jet air ejector intercooler 17c for cooling.

On the other hand, the working steam coming from the SJAE working steam delivery system 36 and bypassing the first-stage ejector 17a is injected into the steam jet air ejector second-stage ejector 17b after passing through the second working steam line 39b and isolation valve 41. Then, the second-stage ejector 17b aggressively sucks out the working steam containing the non-condensable gas and cooled by the steam jet air ejector intercooler 17c through the suction port and guides the working steam to an off-gas treatment system facility 43. Further, without using a mechanical motion unit of an active component such as a pump, the steam jet air ejector 17 sucks the non-condensable gas out of the steam condenser 15 together with steam under a negative suction pressure under the action of the working steam using a passive component and ejects the non-condensable gas to the off-gas treatment system facility 43.

After being sent from the steam jet air ejector 17 to the off-gas treatment system facilities 43, the treated non-condensable gas is released into the atmosphere through an exhaust stack 44. The steam jet air ejector 17 needs the multistage (e.g., two-stage) ejector 17a and 17b in order to increase suction pressure to a level required to send the non-condensable gas from inside the steam condenser to the off-gas treatment system facility 43.

Incidentally, the SJAE working steam supply system 28 uses the reactor main steam or moisture separator reheater scavenging steam as a working steam source. When the steam pressure measured by the pressure monitoring device 31 installed on the scavenging steam line 30 becomes equal to or higher than the specified pressure of the working steam of the steam jet air ejector 17, e.g., 2MPa, the SJAE working steam supply system 28 switches the working steam of the steam jet air ejector 17 from the reactor main steam to the scavenging steam. In this case, the isolation valve 32 of the scavenging steam line 30 is opened, and the scavenging steam is supplied to the steam jet air ejector working steam delivery system 36.

At this time, the isolation valve 34 on the reactor main steam line 26 is closed to thereby isolate the reactor main steam from the SJAE working steam delivery system 36. By isolating the reactor main steam line 26 from the SJAE working steam delivery system 36, it is possible to use the scavenging steam of smaller energy as working steam without using the reactor main steam of great energy as working steam. This makes it possible to increase amounts of the main steam sent to main turbines (high-pressure turbine 12 and low-pressure turbine 14) to thereby improve the thermal efficiency of the plant.

The high-pressure feed-water heaters 22 recover the turbine bleed steam from the high-pressure turbine 12, but unlike conventional nuclear power plants, the scavenging steam sent to the SJAE working steam supply system 28 which uses the reactor main steam or turbine bleed steam as a working steam source does not need to be recovered in the high-pressure feed-water heaters 22.

Further, by using the scavenging steam from the moisture separator reheater 13 as the working steam of the steam jet air ejector 17, it is possible to reduce the dissolved oxygen concentration (including hydrogen) in the feed water.

Hereunder, a non-condensable gas extraction method for nuclear power plant will be explained.

In the nuclear power plant 10, non-condensable gases such as hydrogen and oxygen in the steam condenser 15 are continuously extracted by the steam jet air ejector 17 serving as a gas extractor. The extracted non-condensable gases are discharged into the atmosphere through the exhaust stack 44 after the working steam is treated by the off-gas treatment system facilities 43.

With the non-condensable gas extraction method for the nuclear power plant 10, the working steam supplied to the steam jet air ejector 17 is regulated to the specified pressure, e.g., 2MPa, by the pressure regulating valve 38 of the pressure-regulating unit.

Then, using the reactor main steam or moisture separator reheater scavenging steam as working steam source, the SJAE working steam supply system 28 provided in the working steam system 24 of the steam jet air ejector supplies the working steam from the SJAE working steam supply system 28 to the pressure regulating valve 38 of the SJAE working steam delivery system 36. The supplied working steam is regulated to the specified pressure by the pressure regulating valve 38 and injected into the first-stage ejector 17a of the steam jet air ejector 17 from the SJAE working steam delivery system 36, thereby aggressively sucking non-condensable gases out of the steam condenser 15 through an intake port of the first-stage ejector 17a.

The non-condensable gases which have been sucked out pass through the intercooler 17c are then sucked in again by the second-stage ejector 17b of the steam jet air ejector 17. The working steam coming from the SJAE working steam delivery system 36 through the second working steam line 39b is injected into the second-stage ejector 17b, and the non-condensable gases are sucked out by an ejector effect of the working steam. In this way, the extracted non-condensable gases are sent to the off-gas treatment system facility 43, and then released into the atmosphere through the exhaust stack 44 after the working steam is treated.

The steam jet air ejector 17, which is made up of a two-stage ejectors 17a and 17b of a steam jet type, increases the pressure of the non-condensable gas from vacuum in the steam condenser 15 to a level required to send the non-condensable gas to the off-gas treatment system facility 43. The steam jet air ejector 17, which includes two stages of ejectors 17a and 17b, uses the reactor main steam or moisture separator reheater scavenging steam depressurized by the pressure regulating valve 38 as working steam.

Regarding the moisture separator reheater scavenging steam, when the pressure monitoring device 31 of the SJAE working steam supply system 28 detects that the steam pressure has become equal to or higher than the specified pressure, the reactor main steam of great energy is switched to the moisture separator reheater scavenging steam, and the moisture separator reheater scavenging steam of smaller energy is used as the working steam to be supplied to the steam jet air ejector 17.

By using the moisture separator reheater scavenging steam instead of the reactor main steam as the working steam of the steam jet air ejector 17, it is possible to increase the amounts of the main steam flowing into the main turbines (high-pressure turbine 12 and low-pressure turbine 14) to thereby improve the plant thermal efficiency.

Furthermore, since the scavenging steam passing through the scavenging steam line 30 is not used in the high-pressure feed-water heaters 22 of the reactor condensate/feed-water system, it is possible to reduce the dissolved oxygen concentration of non-condensable gases in the feed water and thereby improve safety and stability of plant operation.

### [Advantageous Effects of First Embodiment]

According to the first embodiment described above the following advantageous effects and functions will be achieved.

In the nuclear power plant of the above embodiment, since the reactor main steam from the reactor main steam line 26 is no longer used as the working steam of the steam jet air ejector 17 after the moisture separator reheater scavenging steam reaches the specified pressure, the amounts of the main steam flowing into the main turbines can be increased, thus contributing to improvement of the plant efficiency.

Furthermore, since the scavenging steam which uses the reactor main steam or high-pressure turbine bleed steam as a working steam source no longer needs to be recovered in the high-pressure feed-water heaters 22, it is possible to reduce the dissolved oxygen concentration (including hydrogen) in the feed water by using the scavenging steam as the working steam of the steam jet air ejector 17, thereby improving the safety and stability of the nuclear power plant.

### [Second Embodiment]

Next, a second embodiment of the nuclear power plant according to the present invention will be described with reference to accompanying drawings.

In the second embodiment, an overall configuration of the nuclear power plant 10A and a working steam system 24A of a steam jet air ejector do not differ substantially from those of the first embodiment, and thus the same components as those in the first embodiment are denoted by the same reference numerals as the corresponding components in the first embodiment and repeated description thereof will be omitted or simplified herein.

In the second embodiment, a steam switching control device 50 adapted to automatically switch the working steam of the steam jet air ejector 17 from the reactor main steam to the scavenging steam is installed in the SJAE working steam supply system 28 as indicated by the alternate long and short dashed lines in Fig. 2.

The steam switching control device 50 monitors the pressure of the scavenging steam using the pressure monitoring device 31 such as a steam gauge, and automatically performs on/off control of the isolation valves 32 and 34 when the scavenging steam pressure reaches the specified pressure. In this case, the steam switching control device 50 closes one isolation valve 34 and opens the other isolation valve 32. The steam switching control device 50 automatically switches the working steam of the steam jet air ejector 17 from the reactor main steam to the scavenging steam and supplies the scavenging steam to the steam jet air ejector (SJAE) working steam delivery system 36.

At this moment, the isolation valve 34 on the reactor main steam line 26 is closed so as to isolate the reactor main steam from the SJAE working steam delivery system 36.

In the second embodiment, the steam switching control device 50 is installed in the SJAE working steam supply system 28 of the nuclear power plant 10 according to the first embodiment to allow the working steam of the steam jet air ejector 17 to be automatically switched from the reactor main steam to the scavenging steam when the scavenging steam pressure reaches the specified pressure, and accordingly, the substantially the same and identical effects and functions as those achieved by the first embodiment can be also achieved.

### [Advantageous Effects of Second Embodiment]

According to the above second embodiment, the following advantageous effects will be achieved.

With the nuclear power plant 10A according to the second embodiment, as like as the first embodiment, since the reactor main steam from the reactor main steam line 26 is no longer used as the working steam of the steam jet air ejector 17, a flow rate of the main steam flowing into the main turbines can be increased, thus making it possible to improve the plant efficiency.

Furthermore, since the reactor main steam and scavenging steam no longer need to be recovered in the high-pressure feed-water heaters of the reactor feed-water system, it becomes possible to reduce the dissolved oxygen concentration (including hydrogen) in the feed water by using the scavenging steam as the working steam of the steam jet air ejector 17.

### [Third Embodiment]

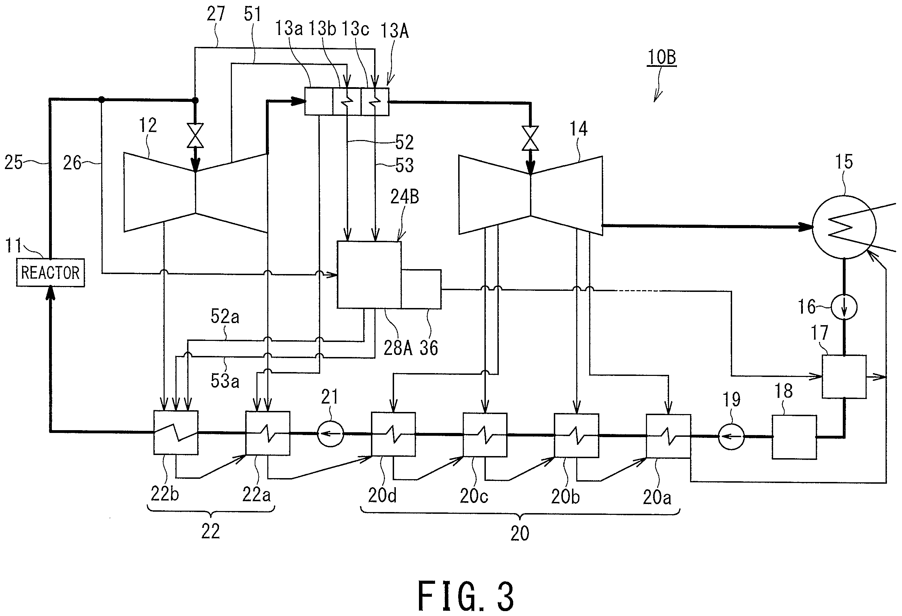

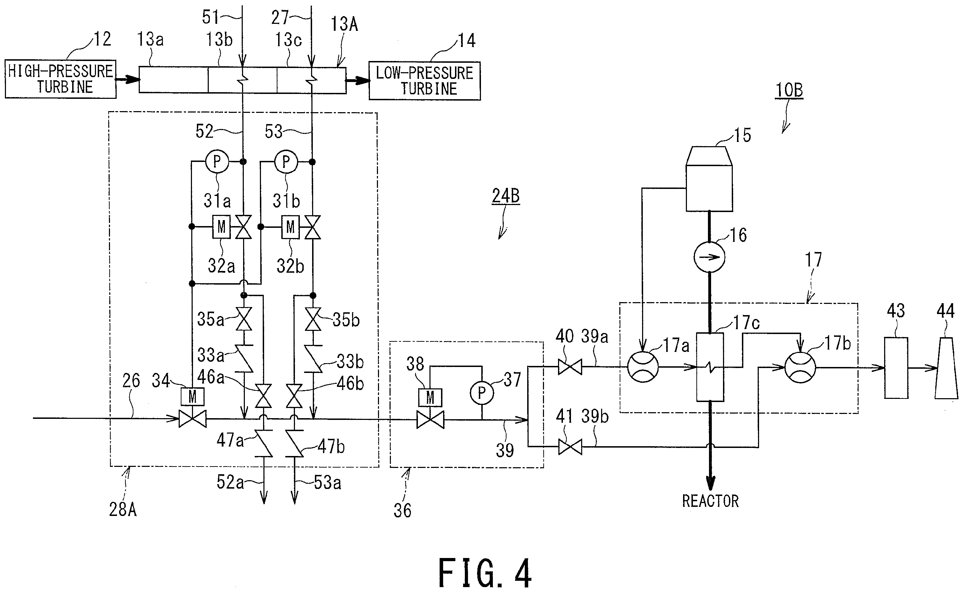

Next, a third embodiment of the nuclear power plant according to the present invention will be described with reference to Figs. 3 and 4.

Fig. 3 shows an overall configuration of the third embodiment of the nuclear power plant and Fig. 4 is a system diagram showing a working steam system of a steam jet air ejector installed in the nuclear power plant of this embodiment.

The nuclear power plant 10B according to the third embodiment does not differ from the nuclear power plant 10 according to the first embodiment except for a moisture separator reheater (MSR) 13A and a working steam system 24B of the steam jet air ejector, and thus, the same reference numerals are denoted to the components corresponding to those in the first embodiment and detailed description thereof will be omitted or simplified herein.

The moisture separator reheater (reheater) 13A installed in the nuclear power plant 10B according to the third embodiment is a multistage (two-stage) reheater and includes a moisture separator 13a as well as a first-stage heater 13b and second-stage heater 13c of the moisture separator reheater 13A.

The first-stage heater 13b is connected with a high-pressure turbine extraction line 51 from an intermediate stage of the high-pressure turbine 12, while the second-stage heater 13c is connected with the reactor main steam line 27 branching off from the reactor main steam system 25.

A first-stage scavenging steam line 52 adapted to pass the first-stage scavenging steam from the first-stage heater 13b and a second-stage scavenging steam line 53 adapted to pass the second-stage scavenging steam from the second-stage heater 13c are connected to an SJAE working steam supply system 28A. That is, according to the present embodiment, the nuclear power plant 10B equipped with the multistage (two-stage) reheater type moisture separator reheater 13A has a structure capable of using at least one of the first-stage scavenging steam and second-stage scavenging steam as steam used as working steam of the steam jet air ejector via the SJAE working steam supply system 28A.

On the other hand, as shown in Fig. 4, the first-stage scavenging steam line 52 is connected with a pressure monitoring device 31 a, an isolation valve 32a, a stop valve 35a, and a check valve 33a in sequence, in which the pressure monitoring device 31a is adapted to monitor the steam pressure. Furthermore, the second-stage scavenging steam line 53 is connected with a pressure monitoring device 31 b, an isolation valve 32b, a stop valve 35b, and a check valve 33b in sequence, in which the pressure monitoring device 31 b is adapted to monitor the same main steam pressure.

The first-stage scavenging steam line 52 and second-stage scavenging steam line 53 are connected in sequence to a downstream side of the isolation valve 34 on the reactor main steam line 26. In this way, installation of the isolation valves 34, 32a, and 32b on the reactor main steam line 26, first-stage scavenging steam line 52, second-stage scavenging steam line 53, respectively, allows the SJAE working steam supply system 28A to be isolated from the SJAE working steam delivery system 36.

Herein, with the working steam system 24B of the steam jet air ejector 17 shown in Fig. 4, the steam passed to the SJAE working steam supply system 28A is the reactor main steam, the moisture separator reheater first-stage scavenging steam, or the moisture separator reheater second-stage scavenging steam.

The pressure monitoring devices 31 a and 31 b adapted to monitor the respective steam pressures are installed on the first-stage scavenging steam line 52 and second-stage scavenging steam line 53. Furthermore, the isolation valves 34, 32a, and 32b are also installed on the first-stage scavenging steam line 52, second-stage scavenging steam line 53, and reactor main steam line 26, respectively, so as to isolate the steam lines from the steam jet air ejector (SJAE) working steam delivery system 36.

In addition, the pressure monitoring device 37 adapted to monitor the working steam pressure of the steam jet air ejector 17 and the pressure regulating valve 38 adapted to regulate the working steam of the steam jet air ejector 17 to the specified pressure are installed in the SJAE working steam delivery system 36.

In the working steam system 24B of the steam jet air ejector 17 of the third embodiment, when the steam pressure measured by the pressure monitoring device 31 b installed on the second-stage scavenging steam line 53 becomes equal to or higher than the specified pressure, e.g., 2MPa, at which the steam jet air ejector 17 operates, the working steam of the steam jet air ejector 17 is switched from the reactor main steam to the second-stage scavenging steam. At this moment, the isolation valve 32b of the second-stage scavenging steam line 53 is opened to supply the second-stage scavenging steam to the SJAE working steam delivery system 36, and the isolation valve 34 on the reactor main steam line 26 is closed, isolating the reactor main steam from the SJAE working steam delivery system 36.

Similarly, when the steam pressure measured by the pressure monitoring device 31a installed on the first-stage scavenging steam line 52 becomes equal to or higher than the specified pressure at which the steam jet air ejector 17 operates, the working steam of the steam jet air ejector 17 is switched from the second-stage scavenging steam to the first-stage scavenging steam. At this moment, the isolation valve 32a of the first-stage scavenging steam line 52 is opened to supply the first-stage scavenging steam to the SJAE working steam delivery system 36. On the other hand, the isolation valve 32b of the second-stage scavenging steam line 53 is closed, isolating the second-stage scavenging steam from the SJAE working steam delivery system 36.

However, the use of the first-stage scavenging steam as the working steam of the steam jet air ejector 17, does not exclude the case of switching of the working steam from the reactor main steam directly to the first-stage scavenging steam without using the second-stage scavenging steam, and also, the reversal of the order in which the first-stage scavenging steam and second-stage scavenging steam are switched in not excluded either. Furthermore, the switching may be done automatically as like as the case of the second embodiment.

Furthermore, a first-stage branch scavenging steam line 52a is branched from the first-stage scavenging steam line 52 upstream of the stop valve 35a and connected to the high-pressure feed-water heater 22 via a stop valve 46a and check valve 47a, and also, a second-stage branch scavenging steam line 53a is branched from the second-stage scavenging steam line 53 upstream of the stop valve 35b as well and also connected to the high-pressure feed-water heater 22 via a stop valve 46b and check valve 47b. In this way, the first-stage and second-stage branch scavenging steam lines 52a and 53a are connected to the high-pressure feed-water heater 22b or 22a.

Hereinafter, a non-condensable gas extraction method for nuclear power plant according to this embodiment will be described.

### [Non-Condensable Gas Extraction Method]

In the nuclear power plant 10B according to the third embodiment, non-condensable gases such as hydrogen and oxygen can be extracted continuously out of the steam condenser 15 by the steam jet air ejector 17. The extracted non-condensable gases are released into the atmosphere through the exhaust stack 44 after the working steam is treated by the off-gas treatment system facility 43.

In the non-condensable gas extraction method for the nuclear power plant 10B, the working steam supplied to the steam jet air ejector 17 adapted to extract non-condensable gas out of the steam condenser 15 is regulated to the specified pressure, e.g., required pressure of 2MPa, by the pressure regulating valve 38 of the pressure-regulating unit, and the nuclear power plant 10B is equipped with the two-stage reheat type moisture separator reheater 13A.

The SJAE working steam supply system 28A installed in the working steam system 24B of the steam jet air ejector uses the reactor main steam, the moisture separator reheater first-stage scavenging steam, or the moisture separator reheater second-stage scavenging steam as a working steam source. The working steam source then supplies working steam from the SJAE working steam supply system 28A to the pressure regulating valve 38 of the SJAE working steam delivery system 36. The supplied working steam is regulated to the specified pressure by the pressure regulating valve 38 and injected into the first-stage ejector 17a of the steam jet air ejector 17 from the SJAE working steam delivery system 36, thereby aggressively sucking non-condensable gases such as oxygen and hydrogen out of the steam condenser 15 through the intake port of the first-stage ejector 17a.

The sucked-out non-condensable gases are then sucked in by the second-stage ejector 17b of the steam jet air ejector 17 through the intercooler 17c. The working steam coming from the SJAE working steam delivery system 36 through the second working steam line 39b is injected into the second-stage ejector 17b, and the non-condensable gases are sucked out by an ejector effect of the working steam. In this way, the extracted non-condensable gases are sent to the off-gas treatment system facility 43 and then released into the atmosphere through the exhaust stack 44 after the working steam is treated.

The steam jet air ejector 17, which is made up of a two-stage ejector 17a and 17b of a steam jet type, increases the pressure of the non-condensable gas from the steam condenser 15 to a level required to send the non-condensable gas to the off-gas treatment system facility 43. The steam jet air ejector 17, which includes two stages of ejectors 17a and 17b, uses the reactor main steam or moisture separator reheater scavenging steam depressurized by the pressure regulating valve 38 as working steam.

The steam pressures of the moisture separator reheater scavenging steam are detected by the pressure monitoring devices 31 a and 31 b, respectively, and when the steam pressures of the moisture separator reheater scavenging steam reach the specified pressure, the steam jet air ejector working steam can be switched by the moisture separator reheater scavenging steam pressures from the reactor main steam to the moisture separator reheater second-stage scavenging steam, and then to the moisture separator reheater first-stage scavenging steam in sequence.

A surplus of, for example, the second-stage scavenging steam is sent to the high-pressure feed-water heaters 22 and used so as to heat the feed water.

In any case, with the non-condensable gas extraction method for an nuclear power plant, since the reactor main steam designed to drive the steam jet air ejector 17 is no longer used as the working steam of the steam jet air ejector 17 after the steam pressures of the moisture separator reheater scavenging steam reach the specified pressure, the amounts of the main steam flowing into the main turbines can be increased, thus making it possible to improve the plant thermal efficiency.

Moreover, the scavenging steam which uses the reactor main steam or the high-pressure turbine bleed steam as a steam source need not be necessarily recovered in the high-pressure feed-water heaters 22, and the use of the scavenging steam as the working steam of the steam jet air ejector 17 makes it possible to reduce the dissolved oxygen concentration (including hydrogen) in the feed water, thereby improving the safety and stability of the nuclear power plant.

### [Advantageous Effects of Third Embodiment]

The third embodiment of the characters described above will achieve the following advantageous functions and effects.

In the nuclear power plant, since the reactor main steam from the reactor main steam line 26 is no longer used as the working steam of the steam jet air ejector 17 after the steam pressures of the scavenging steam reach the specified pressure, the amounts of the main steam flowing into the main turbines can be increased, thus contributing to improvement of the plant thermal efficiency.

In addition, when the first-stage scavenging steam and second-stage scavenging steam, which use the reactor main steam or high-pressure turbine bleed steam as a working steam source, are used as the working steam of the steam jet air ejector 17, the dissolved oxygen concentration of the non-condensable gases in the feed water can be reduced, thereby improving the safety and stability of the nuclear power plant.

### [Fourth Embodiment]

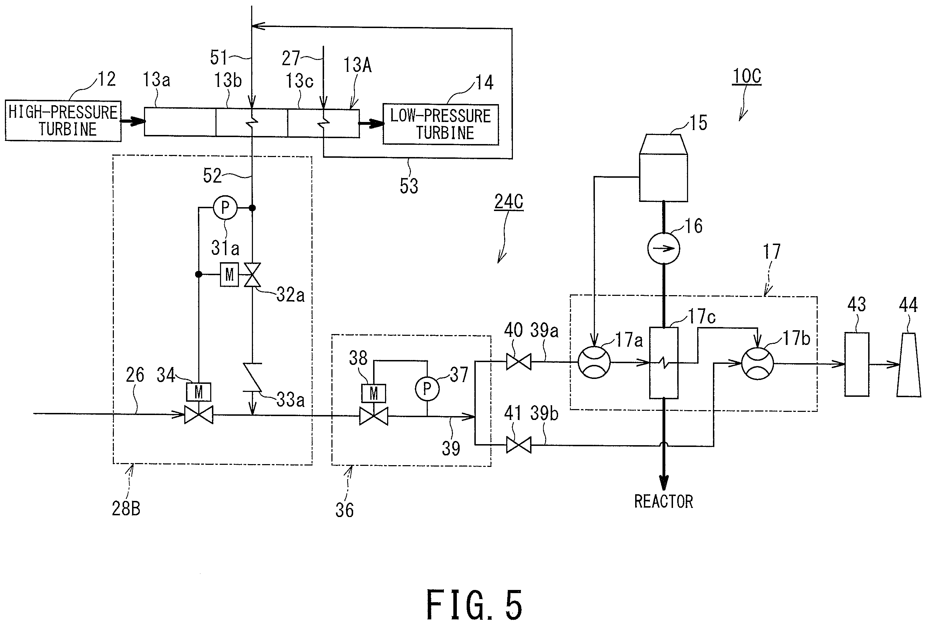

A fourth embodiment of the nuclear power plant will be described hereunder with reference to Fig. 5.

The nuclear power plant 10C according to the fourth embodiment is configured such that in a working steam system 24C of the steam jet air ejector, the steam passed to a steam jet air ejector (SJAE) working steam supply system 28B is the reactor main steam or the moisture separator reheater first-stage scavenging steam. The rest of the configuration does not differ substantially from the nuclear power plant 10B shown in Figs. 3 and 4, and thus the same reference numerals are added to components corresponding to those shown in Figs. 3 and 4, and detailed description thereof will be omitted or simplified herein.

According to the fourth embodiment, the first-stage scavenging steam line 52 of the working steam system 24C of the steam jet air ejector adapted to extract the non-condensable gas out of the steam condenser 15 is equipped with the pressure monitoring device 31a adapted to monitor the steam pressure, the isolation valve 32a for isolation from the SJAE working steam delivery system 36, and the check valve 33a, while on the other hand, the reactor main steam line 26 is also equipped with the isolation valve 34 adapted to isolate the SJAE working steam delivery system 36 and the first-stage scavenging steam line 52 is connected to the downstream side of the isolation valve 34.

The pressure monitoring device 37 adapted to monitor the working steam pressure of the steam jet air ejector (SJAE) 17 and the pressure regulating valve 38 adapted to regulate the working steam of the steam jet air ejector 17 to the specified pressure are also installed in the SJAE working steam delivery system 36.

Further, the second-stage scavenging steam line 53 has an outlet through which the moisture separator reheater (MSR) second-stage scavenging steam flows, and the outlet is connected to the high-pressure turbine extraction line 51 which is a moisture separator reheater first-stage heating steam line, making up the working steam system 24C.

In the working steam system 24C of the steam jet air ejector of the fourth embodiment, when the steam pressure measured by the pressure monitoring device 31a installed on the first-stage scavenging steam line 52 becomes equal to or higher than the specified pressure at which the steam jet air ejector 17 operates, the working steam of the steam jet air ejector 17 is switched from the main steam on the reactor main steam line 26 to the first-stage scavenging steam. At this moment, the isolation valve 32a of the first-stage scavenging steam line 52 is opened to supply the first-stage scavenging steam to the steam jet air ejector (SJAE) working steam delivery system 36. Then, the isolation valve 34 on the reactor main steam line 26 is closed to thereby isolate the reactor main steam from the SJAE working steam delivery system 36.

Furthermore, in the working steam system 24C of the steam jet air ejector 17, since the outlet of the second-stage scavenging steam line 53 is connected to the first-stage scavenging steam line 52, the second-stage scavenging steam joins extraction steam from the first-stage heater 13b and finally becomes the first-stage scavenging steam and serving as the working steam of the steam jet air ejector 17.

At this time, the switching between the reactor main steam line 26 and the first-stage scavenging steam line 52 may be placed under automatic switching control as in the case of the steam switching control device shown in the second and third embodiments.

A non-condensable gas extraction method for a nuclear power plant according to the above embodiment will be described hereunder.

### [Non-Condensable Gas Extraction Method]

In the nuclear power plant 10C according to the fourth embodiment, the non-condensable gases such as hydrogen and oxygen in the steam condenser 15 can be extracted continuously by the steam jet air ejector 17 serving as a gas extractor. The extracted non-condensable gases are released into the atmosphere through the exhaust stack 44 after the working steam is treated by the off-gas treatment system facility 43.

With the non-condensable gas extraction method for the nuclear power plant 10C, the working steam supplied to the steam jet air ejector 17 adapted to extract non-condensable gas out of the steam condenser 15 is regulated to the specified pressure by the pressure regulating valve 38 of the pressure-regulating unit. The nuclear power plant 10C is equipped with the two-stage reheat type moisture separator reheater 13A, and a system configuration is used in which the outlet of the second-stage scavenging steam line 53 is connected to the first-stage scavenging steam line 52.

The SJAE working steam supply system 28B installed in the working steam system 24C of the steam jet air ejector uses the reactor main steam or first-stage scavenging steam as a working steam source and supplies working steam from the SJAE working steam supply system 28B to the pressure regulating valve 38 of the SJAE working steam delivery system 36. The supplied working steam is regulated to the specified pressure by the pressure regulating valve 38 and injected into the first-stage ejector 17a of the steam jet air ejector 17 from the SJAE working steam delivery system 36, thereby aggressively sucking non-condensable gases out of the steam condenser 15 through the intake port of the first-stage ejector 17a.

The non-condensable gases which have been sucked out are then sucked in by the second-stage ejector 17b of the steam jet air ejector 17 through the intercooler 17c. The working steam coming from the SJAE working steam delivery system 36 through the second working steam line 39b is injected into the second-stage ejector 17b, and the non-condensable gases are sucked out by an ejector effect of the working steam. In this way, the extracted non-condensable gases are sent to the off-gas treatment system facility 43 and then released into the atmosphere through the exhaust stack 44 after the working steam is treated.

The steam jet air ejector 17, which is made up of a two-stage ejector 17a and 17b of a steam jet type, increases the pressure of the non-condensable gas from vacuum state in the steam condenser 15 to a level required to send the non-condensable gas to the off-gas treatment system facility 43. The steam jet air ejector 17, which includes two stages of ejectors 17a and 17b, uses the reactor main steam or the moisture separator reheater scavenging steam depressurized by the pressure regulating valve 38 as working steam.

The steam pressures of the moisture separator reheater scavenging steam are detected by the pressure monitoring device 31 a, and when the steam pressures of the moisture separator reheater scavenging steam reach the specified pressure, the steam jet air ejector working steam can be switched by the moisture separator reheater scavenging steam pressures from the reactor main steam to the first-stage scavenging steam.

In any case, with the non-condensable gas extraction method for a nuclear power plant, since the reactor main steam designed to drive the steam jet air ejector 17 is no longer used as the working steam of the steam jet air ejector 17 after the steam pressures of the moisture separator reheater scavenging steam reach the specified pressure, the amounts of the main steam flowing into the main turbines can be increased, thus making it possible to improve the plant thermal efficiency.

Moreover, the scavenging steam which uses the reactor main steam or high-pressure turbine bleed steam as a steam source no longer needs to be recovered in the high-pressure feed-water heaters 22. Use of the scavenging steam as the working steam of the steam jet air ejector 17 makes it possible to reduce the dissolved oxygen concentration (including hydrogen) in the feed water, thereby improving the safety and stability of the nuclear power plant.

### [Advantageous Effects of Fourth Embodiment]

When the pressure monitoring device 31 a of the SJAE working steam supply system 28B indicates pressure equal to or higher than the specified pressure at which the steam jet air ejector 17 operates, since the main steam from the reactor main steam line 26 is no longer used as the working steam of the steam jet air ejector 17 as in the case of the first to third embodiments, the amounts of the main steam flowing into the main turbines can be increased, thus contributing to the improvement of the plant thermal efficiency. Furthermore, since neither the first-stage scavenging steam nor second-stage scavenging steam is recovered in the high-pressure feed-water heater 22 of the reactor feed-water system, the dissolved oxygen concentration in the feed water can be reduced more greatly than in the first to third embodiments.

It is further to be noted that although some embodiments of the present invention have been described above, these embodiments are presented only by way of example, and not intended to limit the scope of the invention set forth in the claims. These novel embodiments can be implemented in various other forms, and various omissions, replacements, and changes can be made without departing from the scope of the invention set forth in the claims. Such embodiments and modifications thereof are included in the scope of the invention as well as in the invention set forth in the appended claims.

## Claims

1. A nuclear power plant including a moisture separator reheater (13) and a condenser (15), the nuclear power plant further comprising,
a steam jet air ejector (17) through which steam condensate is passed from the condensor,
a pressure-regulating unit (37, 38) configured to regulate a working steam supplied to the steam jet air ejector (17) to a specified pressure,
a working steam supply system (28) configured to supply the working steam to the pressure-regulating unit (37, 38), and
a working steam delivery system (36) configured to deliver the working steam regulated by the pressure-regulating unit (37, 38) to the steam jet air ejector (17), and
wherein the working steam supply system (28) includes a working steam source (26, 30) of a reactor main steam or moisture separator reheater scavenging steam, arranged such that the working steam supplied to the pressure-regulating unit (37, 38) is switched from the reactor main steam to the moisture separator reheater scavenging steam when the scavenging steam pressure reaches a predetermined specified pressure.

2. The nuclear power plant according to claim 1, wherein the working steam supply system (28) includes a steam switching control device (50) configured to automatically switch the steam jet air ejector (17) working steam from the reactor main steam to the moisture separator reheater scavenging steam when the moisture separator reheater scavenging steam pressure reaches the specified pressure.

3. The nuclear power plant according to claim 1, wherein the moisture separator reheater is a two-stage reheat type moisture separator reheater, wherein the moisture separator reheater scavenging steam is at least one of moisture separator reheater first-stage scavenging steam and moisture separator reheater second-stage scavenging steam.

4. The nuclear power plant according to claim 3, wherein the working steam system for the steam jet air ejector (17) has a structure in which a moisture separator reheater second-stage scavenging steam line outlet is connected to a moisture separator reheater first-stage heating steam line, the reactor main steam or the moisture separator reheater first-stage scavenging steam is usable as the working steam source of the working steam supply system, and the steam jet air ejector working steam is switchable from the reactor main steam to the moisture separator reheater first-stage scavenging steam in response to moisture separator reheater first-stage scavenging steam pressure.

5. A non-condensable gas extraction method for a nuclear power plant according to claim 1, the method comprising the steps of:
supplying working steam from a working steam supply system (28) to a pressure-regulating unit (37, 38) using a working steam system for the steam jet air ejector (17) while regulating the working steam supplied to the steam jet air ejector (17) to a specified pressure using the pressure-regulating unit (37, 38);
regulating the supplied working steam with the pressure-regulating unit (37, 38) and delivering the regulated working steam to the steam jet air ejector (17) with a working steam delivery system (36);
using reactor main steam or moisture separator reheater scavenging steam as a working steam source of the working steam supply system; and
switching steam jet air ejector working steam from the reactor main steam to the moisture separator reheater scavenging steam when the scavenging steam pressure reaches a predetermined specified pressure.

6. The non-condensable gas extraction method for the nuclear power plant according to claim 5, wherein the nuclear power plant includes a two-stage reheat type moisture separator reheater, wherein the reactor main steam, a moisture separator reheater first-stage scavenging steam, or a moisture separator reheater second-stage scavenging steam is used as the working steam source of the working steam supply system (28), and the steam jet air ejector working steam is switched in response to moisture separator reheater scavenging steam pressures from the reactor main steam to the moisture separator reheater second-stage scavenging steam, and then to the moisture separator reheater first-stage scavenging steam.

7. The non-condensable gas extraction method for the nuclear power plant according to claim 6, wherein the nuclear power plant includes a two-stage reheat type moisture separator reheater, and a moisture separator reheater second-stage scavenging steam line outlet is connected to a moisture separator reheater first-stage heating steam line, the reactor main steam or the moisture separator reheater first-stage scavenging steam is used as the working steam source of the working steam 6135525-2-DTHORPE
supply system (28), and the steam jet air ejector working steam is switched from the reactor main steam to the moisture separator reheater first-stage scavenging steam in response to moisture separator reheater first-stage scavenging steam pressure.

## Patentansprüche

1. Kernkraftanlage, umfassend einen Feuchtigkeitsabscheider-Zwischenerhitzer (13) und einen Kondensator (15),
wobei die Kernkraftanlage ferner umfasst
einen Dampfstrahl-Luftausstoßer (17), durch welchen Dampfkondensat aus dem Kondensator geführt wird,
eine Druckregelungseinheit (37, 38), welche zum Regeln eines dem Dampfstrahl-Luftausstoßer (17) gefördertes Nutzdampfes auf einem vorgegebenen Druck konfiguriert ist,
ein Nutzdampfzuführsystem (28), welches zum Zuführen des Nutzdampfes an die Druckregelungseinheit (37, 38) konfiguriert ist, und
ein Nutzdampfspeisesystem (36), welches zum Speisen des von der Druckregelungseinheit (37, 38) geregeltes Nutzdampfs in den Dampfstrahl-Luftausstoßer (17) konfiguriert ist, und
wobei das Nutzdampfzuführsystem (28) eine Nutzdampfquelle (26, 30) für Reaktorhauptdampf oder Feuchtigkeitsabscheider-Zwischenerhitzerspüldampf umfasst, welche so angeordnet ist, dass der an die Druckregelungseinheit (37, 38) zugeführte Nutzdampf vom Reaktorhauptdampf zum Feuchtigkeitsabscheider-Zwischenerhitzerspüldampf umgeschaltet wird, wenn der Spüldampfdruck einen vorbestimmten Druck erreicht.

2. Kernkraftanlage nach Anspruch 1, wobei das Nutzdampfzuführsystem (28) eine Dampfumschaltsteuerungsvorrichtung (50) umfasst, welche zum automatischen Umschalten des Nutzdampfes des Dampfstrahl-Luftausstoßers (17) vom Reaktorhauptdampf zum Feuchtigkeitsabscheider-Zwischenerhitzerspüldampf konfiguriert ist, wenn der Druck des Feuchtigkeitsabscheider-Zwischenerhitzerspüldampfes einen vorgegebenen Druck erreicht.

3. Kernkraftanlage nach Anspruch 1, wobei der Feuchtigkeitsabscheider-Zwischenerhitzer ein zweistufiger Feuchtigkeitsabscheider-Zwischenerhitzer ist, wobei der Feuchtigkeitsabscheider-Zwischenerhitzerspüldampf zumindest ein Feuchtigkeitsabscheider-Zwischenerhitzerspüldampf einer ersten Stufe und ein Feuchtigkeitsabscheider-Zwischenerhitzerspüldampf einer zweiten Stufe ist.

4. Kernkraftanlage nach Anspruch 3, wobei das Nutzdampfsystem für den Dampfstrahl-Luftausstoßer (17) eine Struktur aufweist, in welcher eine Ausgangsleitung für Feuchtigkeitsabscheider-Zwischenerhitzerspüldampf einer zweiten Stufe mit einer Feuchtigkeitsabscheider-Zwischenerhitzer-Erhitzdampfleitung einer ersten Stufe verbunden ist, wobei der Reaktorhauptdampf oder der Feuchtigkeitsabscheider-Zwischenerhitzerspüldampf der ersten Stufe als Nutzdampfquelle des Nutzdampfzuführsystems verwendet werden kann, und der Nutzdampf des Dampfstrahl-Luftausstoßers vom Reaktorhauptdampf zum Feuchtigkeitsabscheider-Zwischenerhitzerspüldampf der ersten Stufe als Reaktion zum Druck des Feuchtigkeitsabscheider-Zwischenerhitzerspüldampfes umgeschaltet werden kann.

5. Extraktionsverfahren für nicht kondensierbares Gas für eine Kernkraftanlage nach Anspruch 1, wobei das Verfahren folgende Schritte umfasst:
Zuführen eines Nutzdampfes von einem Nutzdampfzuführsystem (28) zu einer Druckregelungseinheit (37, 38) mittels eines Nutzdampfsystems für den Dampfstrahl-Luftausstoßer (17), während der dem Dampfstrahl-Luftausstoßer (17) zugeführte Nutzdampf auf einem vorbestimmten Druck mittels der Druckregelungseinheit (37, 38) geregelt wird;
Regeln des zugeführten Nutzdampfes mit der Druckregelungseinheit (37, 38) und Speisen des regulierten Nutzdampfes in den Dampfstrahl-Luftausstoßer (17) mit einem Nutzdampfspeisesystem (36);
Verwenden des Reaktorhauptdampfes oder des Feuchtigkeitsabscheider-Zwischenerhitzerspüldampfes als Nutzdampfquelle des Nutzdampfspeisesystems; und
Umschalten des Dampfstrahl-Luftausstoßers vom Reaktorhauptdampf zum Feuchtigkeitsabscheider-Zwischenerhitzerspüldampf wenn der Spüldampfdruck einen vorbestimmten Druck erreicht.

6. Extraktionsverfahren für nicht kondensierbares Gas für die Kernkraftanlage nach Anspruch 5, wobei die Kernkraftanlage einen zweistufigen Feuchtigkeitsabscheider-Zwischenerhitzer umfasst, wobei der Reaktorhauptdampf, ein Feuchtigkeitsabscheider-Zwischenerhitzerspüldampf einer ersten Stufe oder ein Feuchtigkeitsabscheider-Zwischenerhitzerspüldampf einer zweiten Stufe als Nutzdampfquelle des Nutzdampfzuführsystems (28) verwendet wird, und der Nutzdampf des Dampfstrahl-Luftausstoßers, als Reaktion auf Drücke des Feuchtigkeitsabscheider-Zwischenerhitzerspüldampfs, vom Reaktorhauptdampf zum Feuchtigkeitsabscheider-Zwischenerhitzerspüldampf der zweiten Stufe und dann zum Feuchtigkeitsabscheider-Zwischenerhitzerspüldampf der ersten Stufe umgeschaltet wird.

7. Extraktionsverfahren für nicht kondensierbares Gas für die Kernkraftanlage nach Anspruch 6, wobei die Kernkraftanlage einen zweistufigen Feuchtigkeitsabscheider-Zwischenerhitzer umfasst, und ein Leitungsausgang für Feuchtigkeitsabscheider-Zwischenerhitzerspüldampf einer zweiten Stufe mit einer Leitung für Feuchtigkeitsabscheider-Zwischenerhitzerspüldampf einer ersten Stufe verbunden wird, wobei der Reaktorhauptdampf oder der Feuchtigkeitsabscheider-Zwischenerhitzerspüldampf der ersten Stufe als Nutzdampfquelle des Nutzdampfzuführsystems (28) verwendet wird, und der Nutzdampf des Dampfstrahl-Luftausstoßers vom Reaktorhauptdampf zum Feuchtigkeitsabscheider-Zwischenerhitzerspüldampf der ersten Stufe als Reaktion auf einen Druck des Feuchtigkeitsabscheider-Zwischenerhitzerspüldampfs der ersten Stufe umgeschaltet wird.

## Revendications

1. Centrale nucléaire comprenant un resurchauffeur à séparateur d'humidité (13) et un condenseur (15), la centrale nucléaire comprenant en outre,
un éjecteur d'air à jet de vapeur (17) à travers lequel on fait passer un condensat de vapeur en provenance du condenseur,
une unité de régulation de pression (37, 38) configurée pour réguler une vapeur de service fournie à l'éjecteur d'air à jet de vapeur (17) sous une pression définie,
un système de fourniture de vapeur de service (28) configuré pour fournir la vapeur de service à l'unité de régulation de pression (37, 38), et
un système de distribution de vapeur de service (36) configuré pour distribuer la vapeur de service régulée grâce à l'unité de régulation de pression (37, 38) à l'éjecteur d'air à jet de vapeur (17), et
dans laquelle le système de fourniture de vapeur de service (28) comprend une source de vapeur de service (26, 30) d'une vapeur principale de réacteur ou d'une vapeur de récupération de resurchauffeur à séparateur d'humidité, agencée de telle manière que la vapeur de service fournie à l'unité de régulation de pression (37, 38) est commutée de la vapeur principale de réacteur vers la vapeur de récupération de resurchauffeur à séparateur d'humidité lorsque la pression de vapeur de récupération atteint une pression définie prédéterminée.

2. Centrale nucléaire selon la revendication 1, dans laquelle le système de fourniture de vapeur de service (28) comprend un dispositif de commande de commutation de vapeur (50) configuré pour commuter de manière automatique la vapeur de service de l'éjecteur d'air à jet de vapeur (17) de la vapeur principale de réacteur vers la vapeur de récupération de resurchauffeur à séparateur d'humidité lorsque la pression de la vapeur de récupération de resurchauffeur à séparateur d'humidité atteint la pression définie.

3. Centrale nucléaire selon la revendication 1, dans laquelle le resurchauffeur à séparateur d'humidité est un resurchauffeur à séparateur d'humidité de type resurchauffe à deux étages, dans laquelle la vapeur de récupération de resurchauffeur à séparateur d'humidité est au moins une parmi une vapeur de récupération de premier étage de resurchauffeur à séparateur d'humidité et une vapeur de récupération de deuxième étage de resurchauffeur à séparateur d'humidité.

4. Centrale nucléaire selon la revendication 3, dans laquelle le système de vapeur de service destiné à l'éjecteur d'air à jet de vapeur (17) présente une structure dans laquelle un orifice de sortie de conduite de vapeur de récupération de deuxième étage de resurchauffeur à séparateur d'humidité est raccordée à une conduite de vapeur de premier étage de resurchauffeur à séparateur d'humidité, la vapeur principale de vapeur ou la vapeur de récupération de premier étage de resurchauffeur à séparateur d'humidité peut être utilisée comme source de vapeur de service du système de fourniture de vapeur de service, et la vapeur de service de l'éjecteur d'air à jet de vapeur peut être commutée de la vapeur principale de réacteur vers la vapeur de récupération de premier étage de resurchauffeur à séparateur d'humidité en réaction à une pression de vapeur de récupération de premier étage de resurchauffeur à séparateur d'humidité.

5. Procédé d'extraction de gaz non condensable destiné à une centrale nucléaire selon la revendication 1, le procédé comprenant les étapes consistant à :
fournir de la vapeur de service à partir d'un système de fourniture de vapeur de service (28) vers une unité de régulation de pression (37, 38) en utilisant un système de vapeur de service pour l'éjecteur d'air à jet de vapeur (17) tout en régulant la vapeur de service fournie à l'éjecteur d'air à jet de vapeur (17) sous une pression définie en utilisant l'unité de régulation de pression (37, 38) ;
réguler la vapeur de service fournie, grâce à l'unité de régulation de pression (37, 38), et distribuer la vapeur de service régulée vers l'éjecteur d'air à jet de vapeur (17) avec un système de distribution de vapeur de service (36) ;
utiliser de la vapeur principale de réacteur ou de la vapeur de récupération de resurchauffeur à séparateur d'humidité comme source de vapeur de service du système de fourniture de vapeur de service ; et
commuter la vapeur de service de l'éjecteur d'air à jet de vapeur pour la faire passer de la vapeur principale de réacteur à la vapeur de récupération de surchauffeur à séparateur d'humidité lorsque la pression de vapeur de récupération atteint une pression définie prédéterminée.

6. Procédé d'extraction de gaz non condensable destiné à la centrale nucléaire selon la revendication 5, dans lequel la centrale nucléaire comprend un resurchauffeur à séparateur d'humidité de type resurchauffe à deux étages, dans lequel la vapeur principale de réacteur, une vapeur de récupération de premier étage de resurchauffeur à séparateur d'humidité, ou une vapeur de récupération de deuxième étage de resurchauffeur à séparateur d'humidité, est utilisée comme source de vapeur de service du système de fourniture de vapeur de service (28), et la vapeur de service de l'éjecteur d'air à jet de vapeur est commutée, en réaction à des pressions de vapeur de récupération de resurchauffeur à séparateur d'humidité, de la vapeur principale de réacteur vers la vapeur de récupération de deuxième étage de resurchauffeur à séparateur d'humidité, et est commutée ensuite vers la vapeur de récupération de premier étage de resurchauffeur à séparateur d'humidité.

7. Procédé d'extraction de gaz non condensable destiné à la centrale nucléaire selon la revendication 6, dans lequel la centrale nucléaire comprend un resurchauffeur à séparateur d'humidité de type resurchauffe à deux étages, et un orifice de sortie de conduite de vapeur de récupération de deuxième étage de resurchauffeur à séparateur d'humidité est raccordée à une conduite de vapeur de premier étage de resurchauffeur à séparateur d'humidité, la vapeur principale de réacteur ou la vapeur de récupération de premier étage de resurchauffeur à séparateur d'humidité est utilisée comme source de vapeur de service du système de fourniture de vapeur de service (28), et la vapeur de service d'éjecteur d'air à jet de vapeur est commutée de la vapeur principale de réacteur vers la vapeur de récupération de premier étage de resurchauffeur à séparateur d'humidité en réaction à la pression de vapeur de récupération de premier étage de resurchauffeur à séparateur d'humidité.
